# NEUE EUROPÄISCHE PATENTSCHRIFT

(11) **EP 3 786 040 B2**
(45) Veröffentlichungstag und Bekanntmachung des Hinweises auf die Entscheidung über den Einspruch: **05.08.2026**
(45) Hinweis auf die Patenterteilung: 20.04.2022
(21) Anmeldenummer: 20190927.2
(22) Anmeldetag: 13.08.2020
(51) Int. Cl.: B62J 7/02, B62K 7/00, B62K 7/02, B62J 27/30

(54) **LASTENFAHRRADBEHÄLTER**
DELIVERY BICYCLE CONTAINER
RÉCEPTACLE DE BICYCLETTE DE TRANSPORT

(30) Priorität: 02.09.2019 DE 202019104809 U
(43) Veröffentlichungstag der Anmeldung: 03.03.2021
(73) Patentinhaber: RTI Sports GmbH, 56070 Koblenz (DE)
(72) Erfinder: GRAEVE, Arndt, 56072 Koblenz (DE); RASCHE, Johannes, 64285 Darmstadt (DE)
(74) Vertreter: dompatent

(56) Entgegenhaltungen:
- DE-U1- 202015 102 839
- JP-A- 2004 122 876
- BRAAM ILONA: "Elektrische fiets: CUBE onthult krachtige Cargo Hybrid", WANT.NL, 20 August 2019 (2019-08-20), XP055789927, Retrieved from the Internet <URL:https://www.want.nl/elektrische-fiets-cube-cargo-hybrid/> [retrieved on 20210325]
- ANONYMOUS: "Cube Hybrid Cargo", 25 March 2021 (2021-03-25), XP055790036, Retrieved from the Internet <URL:https://www.cube.eu/2021/e-bikes/urban-mobility/transport/cargo-hybrid/cube-cargo-hybrid-iridiumnblack/> [retrieved on 20210325]
- ANONYMOUS: "Cube Cargo Hybrid und Cube Compact Hybrid Die Urban Mobility Offensive - Velomotion", 14 August 2019 (2019-08-14), XP055824457, Retrieved from the Internet <URL:https://www.velomotion.de/magazin/2019/08/cube-cargo-compact-e-bike/> [retrieved on 20210714]
- XAVIER CADEAU: "[Test] Douze Cycles G4e Box, le biporteur qui augmente le volume", WEELZ.FR, 11 July 2019 (2019-07-11), XP055759040, Retrieved from the Internet <URL:https://www.weelz.fr/fr/test-douze-cycles-g4-box-biporteur-velo-cargo/> [retrieved on 20201210]
- DOUZE FACTORY SAS 2020: "Douze cycles Black Box the spacious compartment", DOUZE CYCLES, 10 December 2020 (2020-12-10), XP055759041, Retrieved from the Internet <URL:https://www.douze-cycles.com/en/g4-equipement-2020-2/#blackbox> [retrieved on 20201210]
- ANONYMOUS: "Manual Urban Arrow Family", URBAN ARROW MANUAL, VERSION UAF-FM2017EN-0001, 1 March 2017 (2017-03-01), XP055560313

## Beschreibung

Die Erfindung betrifft einen Lastenfahrradbehälter.

Lastenfahrräder, die zum Transport von Personen, insbesondere Kindern oder Lasten, geeignet sind, weisen eine entsprechende Transportbox auf. Derartige Lastenfahrradbehälter sind häufig als einfache Holzboxen ausgebildet. Insbesondere zur Gewichtsersparnis ist es ferner bekannt, derartige Lastenfahrradbehälter aus Kunststoffmaterial herzustellen.

Ein Lastenfahrrad mit einem Lastenfahrradbehälter, der die Merkmale des Oberbegriffs des Anspruchs 1 aufweist, ist in "Cube Cargo Hybrid und Cube Compact Hybrid: Die Urban Mobility Offensive", siehe https:// www.velomotion.de/magazin/2019/08/cube-cargo-compact-e-bike/, beschrieben.

Aufgabe der Erfindung ist es, einen stabilen Lastenfahrradbehälter aus Kunststoffmaterial herzustellen, der einfach und kostengünstig herstellbar ist.

Die Lösung der Aufgabe erfolgt erfindungsgemäß durch einen Lastenfahrradbehälter mit den Merkmalen des Anspruchs 1.

Der Lastenfahrradbehälter weist ein Bodenelement, zwei einander gegenüberliegend Seitenwände, eine Rückwand und eine Vorderwand auf. Erfindungsgemäß ist der Lastenfahrradbehälter aus zumindest zwei Kunststoffteilen hergestellt. Ein erstes Kunststoffteil umfasst hierbei zumindest eine der Seitenwände und das zweite Kunststoffteil zumindest die zweite Seitenwand. Bei den übrigen Bauteilen, d.h. dem Bodenelement, der Rückwand und der Vorderwand, kann es sich jeweils um gesonderte Bauteile handeln. Erfindungsgemäß umfassen beide Kunststoffteile jeweils zumindest einen Teil der Rückwand und der Vorderwand. Besonders bevorzugt ist es, dass zumindest eines der Kunststoffteile, insbesondere zwei Kunststoffteile, jeweils zusätzlich zu einer der beiden Seitenwände zumindest einen Teil des Bodenelements umfasst. Insbesondere sind diese beiden Kunststoffteile derart ausgebildet, dass eine vertikale Teilung realisiert ist. Unter vertikaler Teilung ist im montierten Zustand zu verstehen, dass die Trennebene zwischen den Kunststoffteilen im Wesentlichen vertikal verläuft, wobei mehrere Trennebenen vorgesehen sein können, wenn der Fahrradtransportbehälter aus mehreren Kunststoffteilen besteht und/oder die Trennebene aus mehreren zueinander versetzen vertikalen Trennebenen-Bereichen aufgebaut sein kann.

Die Kunststoffteile weisen in einer besonders bevorzugten Ausführungsform Partikelschaum auf und sind insbesondere aus Partikelschaum hergestellt. Insbesondere handelt es sich um thermoplastische Partikelschäume. Geeignet ist beispielsweise EPP (expandierbares Polypropylen). Alternativ können zumindest einzelne Teile des Lastenfahrradbehälters auch als Kunststoff-Spritzgussteile hergestellt sein.

Besonders bevorzugt ist es, dass der Lastenfahrradbehälter im Wesentlichen aus nur zwei Kunststoffteilen, d.h. insbesondere zwei Hälften, besteht. Zumindest eine der beiden Hälften umfasst neben einer Seitenwand zumindest Teile des Bodenelements, der Rückwand und der Vorderwand, wobei das zweite Kunststoffteil eine Seitenwand umfasst oder ebenfalls eine Seitenwand und jeweils zumindest einen Teil des Bodenelements und/oder der Rückwand und/oder der Vorderwand umfasst. Hierbei ist es besonders bevorzugt, dass beide Kunststoffteile zusätzlich zu einer Seitenwand jeweils einen Teil des Bodenelements und einen Teil der Rückwand und einen Teil der Vorderwand mitumfassen. Insbesondere ist es bevorzugt, dass die beiden als Hälften ausgebildeten Kunststoffteile jeweils die Hälfte des Bodenelements, der Rückwand und der Vorderwand mit umfassen. Die Trennebene zwischen den beiden als Hälften ausgebildeten Kunststoffteilen verläuft somit in montiertem Zustand als vertikale Mittelebene.

Insbesondere ist es bevorzugt, dass die beiden Kunststoffteile nicht nur als Hälften ausgebildet sind, sondern spiegelbildlich bzw. spiegelsymmetrisch zu dieser vertikalen Trennebene ausgebildet sind, wobei die vertikale Trennebene hierbei die Ebene zwischen den beiden Hälften darstellt und keine Formtrennebene einer zweiteiligen Herstellungsform ausbildet. Derartige Formtrennebenen sind zusätzlich vorgesehen, da die einzelnen Kunststoffteile ggf. entformt werden müssen.

Die vorstehend beschriebene bevorzugte Ausgestaltung der einzelnen Teile, insbesondere der Hälften der Kunststoff-Fahrradbox aus Kunststoffteilen, weist insbesondere den Vorteil auf, dass die einzelnen Teile leicht entformbar sind. Die erforderliche Form ist erheblich kleiner gegenüber einer Form, mit der der gesamte Lastenfahrradbehälter aus einem Kunststoffteil hergestellt würde. Ferner weist die erfindungsgemäße Ausgestaltung des Lastenfahrradbehälters aus mehreren Teilen, insbesondere zwei Hälften mit vertikaler Trennebene, den Vorteil auf, dass in den einzelnen Teilen Ausnehmungen, Vertiefungen u.dgl. auf einfache Weise vorgesehen werden können, ohne dass die Form zur Herstellung des Kunststoffteils aufwändige Schieber, verlorene Kerne o.dgl. zur Erzeugung von Hinterschnitten aufweisen muss.

Besonders bevorzugt ist es, dass eine Entformungsrichtung der Kunststoffteile, insbesondere der beiden Hälften, senkrecht zur jeweiligen Seitenwand und/oder parallel zur Vorderwand bzw. Rückwand bzw. dem Bodenelement verläuft. Hierdurch ist es möglich, das Kunststoffteil auf einfache Weise zu entformen oder insbesondere keine Hinterschnitte vorgesehen sind.

Erfindungsgemäß sind an Innenseiten der Seitenwände Versteifungsrippen vorgesehen. Vorzugsweise sind an der Innenseite der Seitenwände und an Außenseiten der Seitenwände Versteifungsrippen vorgesehen. Bei der bevorzugten Entformungsrichtung und auf Grund des Ausgestaltens des Lastenfahrradbehälters aus insbesondere zwei vertikal geteilten Hälften, können derartige Versteigungsrippen o.dgl. vorgesehen werden, ohne dass hierbei Hinterschnitte auftreten. Durch das Vorsehen derartiger Versteifungsrippen kann die Steifigkeit verbessert werden bzw. hierdurch Material und Gewicht eingespart werden. Die versteifungsrippen können hierbei auch derart ausgebildet sein, dass hierdurch beispielsweise Armauflagen, Halteelemente für Anbauteile, wie Trinkflaschen, Aufbewahrungsfächer u.dgl. ausgebildet sind.

Zusätzlich zu den Versteifungsrippen können in Entformungsrichtung offene Ausnehmungen an der Innenseite und/oder der Außenseite der Seitenwände, aber auch an der Vorderwand oder der Rückwand, auf einfache Weise ausgebildet sein. Auch im Bodenelement können derartige in Entformungsrichtung offene Ausnehmungen vorgesehen sein. Diese können auch an einer Innenseite des Bodenelements offen ausgebildet sein, so dass das Bodenelement Rillen oder Rippen aufweist. Diese dienen einerseits zur Versteifung und können andererseits dazu dienen, dass das Bodenelement an der Innenseite nicht glatt ist, so dass transportierte Güter nicht verrutschen.

Die Verbindung der Kunststoffteile, insbesondere der beiden Hälften des Lastenfahrradbehälters, erfolgt in besonders bevorzugter Ausführungsform über Verbindungselemente. Die Verbindungselemente sind vorzugsweise zumindest teilweise aus Metall ausgebildet. Vorzugsweise ist ein insbesondere im oberen Bereich des Lastenfahrradbehälters angeordneter Verbindungsbügel vorgesehen. Hierbei ist es bevorzugt, dass dieser Verbindungsbügel als eine Art Klammer den Lastenfahrradbehälter vollständig umschließt bzw. umgreift. Der Verbindungsbügel kann auch innerhalb des Lastenfahrradbehälters oder in Ausnehmungen oder Vertiefungen des Lastenfahrradbehälters angeordnet sein. Bevorzugt ist es, dass der Verbindungsbügel insbesondere in sich geschlossen ist und somit eine steife Rahmenkonstruktion ausbildet, die einerseits die Teile des Lastenfahrradbehälters zusammenhält und miteinander verbindet und andererseits eine Kraftaufnahme ermöglicht. Besonders bevorzugt ist daher, dass die Verbindung des Lastenfahrradbehälters mit dem Lastenfahrrad über die Verbindungselemente, und nicht über die Kunststoffteile erfolgt. Hierdurch kann eine zuverlässige Verbindung gewährleistet werden.

Vorzugsweise weist der Verbindungsbügel zwei Bügelelemente auf, die beispielsweise über Schrauben, Rastelemente o.dgl. miteinander verbunden sind. Die Verbindungsbügel sind vorzugsweise U-förmig ausgebildet und verlaufen an einer Seitenwand, wobei das Mittelteil des Bügels an einer Seitenwand verläuft und die beiden Ansätze im Bereich der Vorderwand und der Rückwand verlaufen. Die Verbindung der beiden Bügelelemente erfolgt im Bereich der Vorderwand und/oder der Rückwand, insbesondere in der Mitte dieser beiden Wände. Besonders bevorzugt ist es, dass die Verbindung im Bereich der Trennebene erfolgt.

Vorzugsweise sind die Bügel in einem oberen Bereich nahe einer Oberkante der Seitenwände der Rückwand und der Vorderwand angeordnet. Insbesondere beträgt der Abstand des Bügelelements zu der Oberkante weniger als 10 cm, insbesondere weniger als 5 cm. Des Weiteren ist es bevorzugt, dass der Verbindungsbügel in Ausnehmungen oder Öffnungen angeordnet ist, so dass dieser insbesondere gegenüber einer Außenseite des Lastenfahrradbehälters nicht vorsteht.

Des Weiteren ist es bevorzugt, dass mindestens ein, insbesondere zwei Verbindungsstreben zum Verbinden der einzelnen Kunststoffteile vorgesehen sind. Besonders bevorzugt ist es, dass zwei Verbindungsstreben vorgesehen sind, wobei eine Verbindungsstrebe durch eine Innenseite der Rückwand und die andere Verbindungsstrebe im Bereich einer Innenseite der Vorderwand angeordnet ist. Die beiden Verbindungsstreben können hierbei derart ausgebildet sein, dass diese zwischen den beiden einander gegenüberliegenden Seitenwänden angeordnet sind und in bzw. an den Seitenwänden fixiert sind. Bevorzugt ist es, dass die insbesondere zwei Verbindungsstreben an ihren Enden Ansätze aufweisen. Hierbei kann ein Ansatz als ein insbesondere fest mit der Strebe verbundener Kopf und der andere Ansatz als lösbarer Ansatz, z.B. als Mutter, ausgebildet sein. Insbesondere bei dieser Ausführungsform ist ein Verspannen der Strebe und somit der Kunststoffteile auf einfache Weise möglich. Die Ansätze sind hierbei vorzugsweise in nach außen offenen Vertiefungen der Seitenwände angeordnet. Diese Vertiefungen können mit einem Deckel verschlossen sein.

Insbesondere durch die Kombination eines umlaufenden Verbindungsbügels im oberen Bereich des Lastenfahrradbehälters und zwei Verbindungsstreben im unteren Bereich kann eine gute und stabile Verbindung des Lastenfahrradbehälters realisiert werden. Insbesondere kann auch die Krafteinleitung über die Verbindungselemente erfolgen, wobei es besonders bevorzugt ist, dass der Lastenfahrradbehälter mit dem Lastenfahrrad über die Verbindungselemente verbunden ist.

In Ausnehmungen oder Öffnungen, die in einzelnen Teilen der Lastenaufnahmebehälter vorgesehen sind, können Anbauteile angeordnet oder auf einfache Weise mit der Lastenaufnahmebehälter verbunden werden. Beispielsweise kann in eine nach außen offene, insbesondere schlitzförmige Öffnung ein Trittelement eingesteckt werden. Hierdurch kann, insbesondere für Kinder, der Einstieg in den Lastenfahrradbehälter erleichtert werden.

Bei einer bevorzugten Weiterbildung des Lastenfahrradbehälters weist dieser eine Deckel auf, mit dem die Oberseite des Lastenfahrradbehälters vorzugsweise vollständig verschlossen werden kann. Hierbei ist es bevorzugt, dass der Deckel schwenkbar, ggf. über ein Zwischenelement, mit den Verbindungselementen, insbesondere dem im oberen Bereich angeordneten Verbindungsbügel, verbunden ist. Hierdurch werden die auftretenden Kräfte beim Öffnen und Schließen des Deckels wiederum im Wesentlichen nicht in die Kunststoffteile, sondern in die Verbindungselemente eingeleitet.

Bei einer weiteren bevorzugten Ausführungsform weist das Bodenelement eine Öffnung auf. Durch diese Öffnung ist es möglich, in montiertem Zustand einen Zugang zu einer unterhalb der Lastenaufnahmebehälter angeordneten Batterie o.dgl. zu ermöglichen. Diese Öffnung ist vorzugsweise mit einem Deckel, insbesondere dicht verschlossen.

Ferner betrifft die Erfindung einen Lastenfahrrad-Rahmen mit einem Hinterbau zur Aufnahme eines Hinterrads, einem Gabelelement zur Aufnahme eines Vorderrads und einem Tragelement zur Aufnahme des Lastenaufnahmebehälters zwischen einem Lenkerrohr und dem Gabelelement. Der Lastenaufnahmebehälter ist hierbei wie vorstehend beschrieben ausgebildet.

Gemäß einer bevorzugten Weiterbildung weist der Lastenaufnahmebehälter einen in montiertem Zustand in Fahrtrichtung weisenden Ansatz auf. Dieser Ansatz ragt, zumindest teilweise, über ein Gabelelement. Zumindest ragt dieser Ansatz über einen oberen Bereich des Gabelelements. Der Ansatz des aus einem Kunststoffmaterial hergestellten ersten Aufnahmebehälters weist eine gewisse Elastizität und Verformbarkeit auf. Der Ansatz dient somit als Aufprallschutz, so dass bei einem Unfall die Gefahr von Verletzungen an dem Gabelelement, insbesondere dem oberen Bereich des Gabelelements, deutlich verringert ist. Ein derartiger Ansatz an einem Lastenaufnahmebehälter stellt eine unabhängige Erfindung dar. Diese ist insbesondere unabhängig davon, ob der Lastenaufnahmebehälter eine vertikale Teilung aufweist, aus mehreren Elementen hergestellt ist oder einstückig ausgebildet ist. Auch könnte der entsprechende Ansatz mit einem Lastenaufnahmebehälter verbunden sein. In einer bevorzugten Weiterbildung ist der Lastenaufnahmebehälter, wie vorstehend beschrieben, aus- bzw. weitergebildet.

Nachfolgend wird die Erfindung anhand einer bevorzugten Ausführungsform unter Bezugnahme auf die anliegenden Zeichnungen näher erläutert.

Es zeigen:
- Fig. 1a: eine schematische Seitenansicht eines Lastenfahrrads mit einem erfindungsgemäß ausgebildeten Lastenaufnahmebehälter,
- Fig. 1b: eine schematische perspektivische Seitenansicht eines Lastenfahrrads ohne Lastenaufnahmebehälter,
- Fig. 2: eine perspektivische Seitenansicht einer ersten bevorzugten Ausführungsform des Lastenaufnahmebehälters,
- Fig. 3: eine Seitenansicht einer der beiden Hälften des in Fig. 1 dargestellten Lastenaufnahmebehälters,
- Fig. 4: eine perspektivische Ansicht eines dem in Fig. 1 entsprechenden Lastenaufnahmebehälters mit Deckel,
- Fign. 5a und 5b: eine perspektivische Rückansicht des Lastenaufnahmebehälters mit und ohne Deckel,
- Fign. 6a und 6b: eine Draufsicht eines Lastenaufnahmebehälters mit und ohne integrierten Sitzen und
- Fig. 7: eine der Fig. 6 entsprechende Draufsicht des Lastenaufnahmebehälters mit integrierten Sitzen und einer integrierten Aufbewahrungsbox.

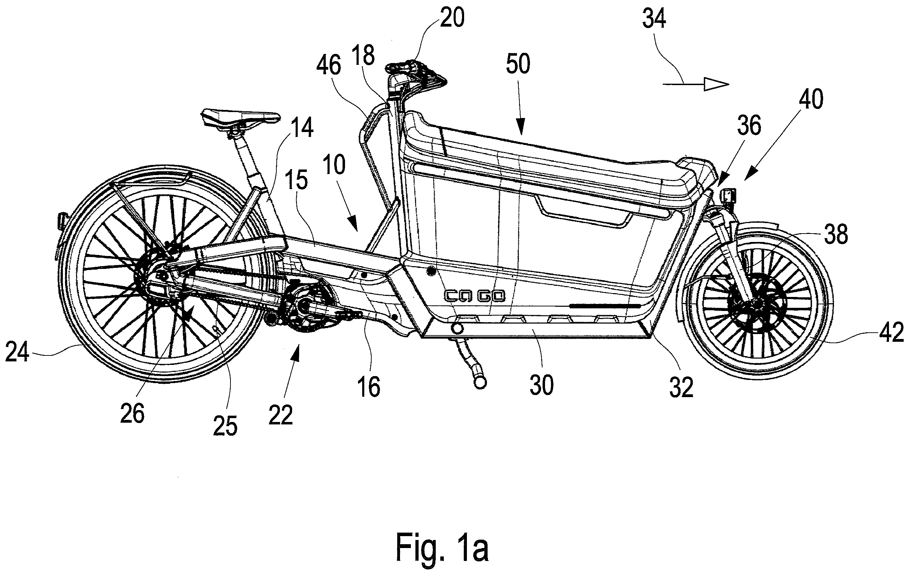

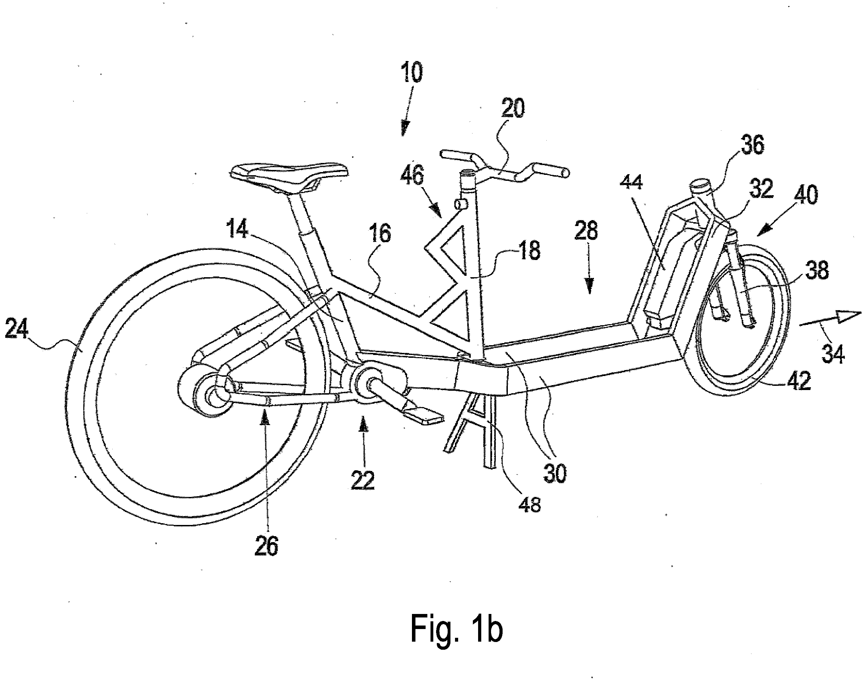

Eine bevorzugte Ausführungsform des erfindungsgemäßen Lastenfahrrads wie in Figur 1 dargestellt weist einen Lastenfahrrad-Rahmen 10 auf. Der Lastenfahrrad-Rahmen 10 weist im dargestellten Ausführungsbeispiel ein Sattelrohr 14, ein Oberrohr 15 und ein von einer Abdeckung verdecktes Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen Antrieb mittels Zahnriemen 25 oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement 28 auf. Das Tragelement 28 weist im dargestellten Ausführungsbeispiel zwei horizontale Rahmenelemente 30 (Fig. 1b) auf, die mit dem Unterrohr 16 sowie dem Lenkerrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

Eine Batterie 44 kann mit dem Tragelement 28 verbunden sein. Im dargestellten Ausführungsbeispiel ist die Batterie 44 zwischen den beiden Gabelelementen 32 des Tragelements angeordnet. Ferner kann die Batterie 44 oder eine weitere Batterie zwischen den beiden Rahmenelementen 30 angeordnet sein.

Mit dem Lenkerrohr 18 ist ein Griffelement 46 verbunden. Im dargestellten Ausführungsbeispiel ist das Griffelement an einer Rückseite des Lenkerrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkerrohr 18 angeordnet sind.

Um das Lastenrad anzuheben oder beispielsweise auf einen Hauptständer 60 zu heben, kann der Nutzer insbesondere am oberen Teil 48 des Griffelements angreifen.

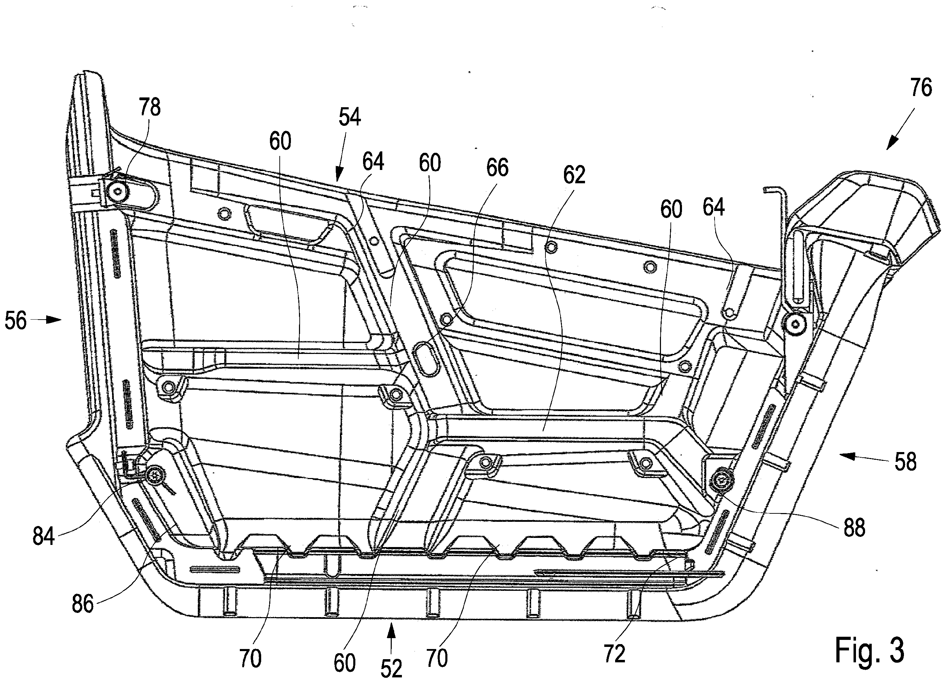

Ein Lastenfahrradbehälter 50 weist ein Bodenelement 52, zwei Seitenelemente 54, eine Rückwand 56 sowie eine Vorderwand 58 auf. In dem dargestellten besonders bevorzugten Ausführungsbeispiel ist der Lastenfahrradbehälter aus im Wesentlichen zwei Kunststoffteilen, wie in Fig. 3 dargestellt, ausgebildet. Die beiden Kunststoffteile sind zu einer vertikalen Mittelebene, die in montiertem Zustand der Fahrradmittelebene entspricht, spiegelbildlich ausgebildet. Jede der beiden Kunststoffteil-Hälften weist somit eine Seitenwand 54, eine halbe Rückwand 56, eine halbe Vorderwand 58 und eine halbes Bodenelement 52 auf.

Erfindungsgemäß ist die Entformungsrichtung senkrecht zur Seitenwand 54, d.h. senkrecht zur Zeichenebene der Fig. 3. Dies hat den wesentlichen Vorteil, dass es möglich ist, auf einfache Weise in Entformungsrichtung Versteifungsrippen 58 vorzusehen, wobei einzelne Versteifungsrippen 60,62 auch als Auflagen, beispielsweise Armauflagen, ausgebildet sein können. Die Rippen 58,60,62 erstrecken sich in Ausformrichtung, so dass keine Hinterschnitte entstehen. Ferner können beispielsweise in Rippen Ausnehmungen 64,66 vorgesehen sein, die nach innen bzw. in Ausformrichtung offen sind. Die schlitzförmigen Ausnehmungen 64 sind ferner an einer Oberseite 68 der Seitenwand 54 offen, so dass hierin beispielsweise Stangen eines Verdecks eingesteckt und justiert werden können. In der Ausnehmung 66 kann beispielsweise ein Flaschenhalter, eine Halterung für Transportgüter etc. angebracht werden.

In dem Bodenelement 52 sind im dargestellten Ausführungsbeispiel als Rillen ausgebildete Ausnehmungen 70 vorgesehen, die an einer Innenseite des Bodenelements 52 angeordnet sind und sich ebenfalls in Entformungsrichtung erstrecken. Hierdurch kann die Oberfläche des Bodenelements strukturiert werden und ebenfalls die Steifigkeit verbessert werden. Ferner ist im Bodenelement eine in Fig. 3 zur Hälfte sichtbare Öffnung 72 vorgesehen. Durch diese Öffnung ist es möglich, die in montiertem Zustand zwischen den beiden Rahmenelementen 30 des Fahrradrahmens 10 angeordnete Batterie beispielsweise zur Wartung oder zur Entnahme zugänglich zu machen. Die Öffnung 72 ist von einem Deckel 74 verschlossen.

Im vorderen oberen Endbereich der Vorderwand 58 ist ferner ein Ansatz 76 vorgesehen. Dieser verdeckt eine Oberseite des Gabelschafts. Der Ansatz 76 ragt in Fahrtrichtung über den oberen Bereich des Gabelelements und dient u.A. als Aufprallschutz.

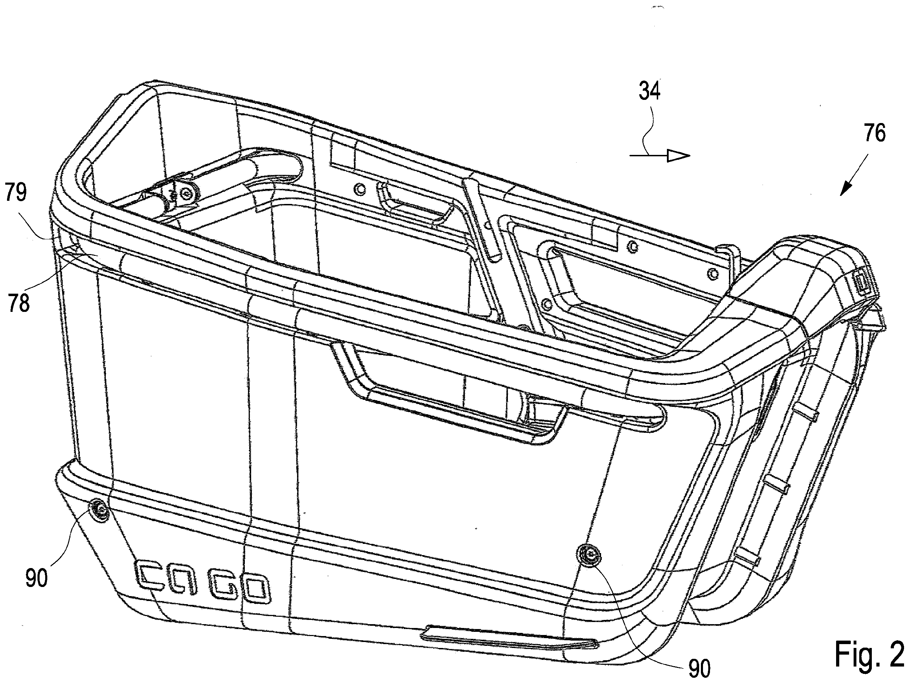

Die beiden in Fig. 3 dargestellten Hälften aus Kunststoff werden zu dem in Fig. 2 dargestellten Lastenfahrradbehälter zusammengesetzt. Zur Fixierung bzw. Verbindung der beiden Hälften ist in einem oberen Bereich ein aus zwei Bügelelementen 78 bestehender Verbindungsbügel vorgesehen. Die beiden Bügelelemente werden im Bereich der Trennebene mit entsprechenden Verbindungselementen verbunden. Die Trennebene ist die in Fig. 3 dargestellte Vorderseite der Hälfte der Rückwand 56 bzw. der Hälfte der Vorderwand 58 sowie der Hälfte des Bodenelements 52. Die beiden Bügelelemente 78 werden fest miteinander verbunden bzw. verspannt, so dass diese eine Klammer im oberen Bereich des Lastenfahrradbehälters ausbilden.

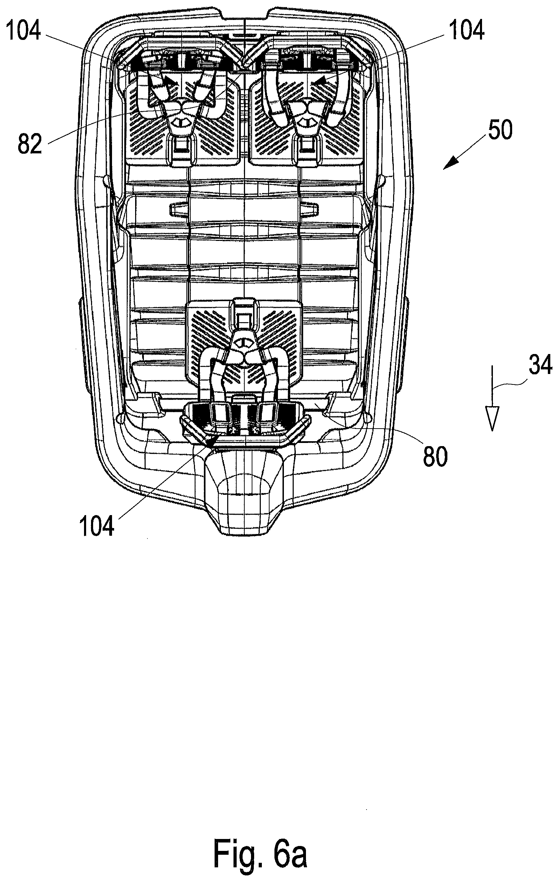

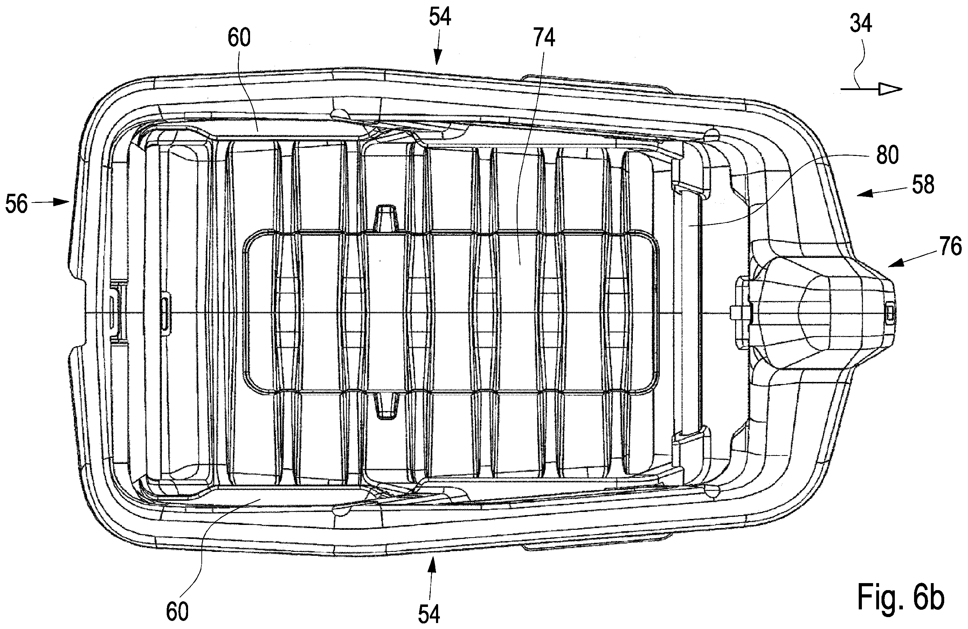

Zur Verbindung der beiden Hälften sind ferner zwei Verbindungsstreben 80,82 (Fig. 6) vorgesehen. Eine in Fahrtrichtung 34 hintere Verbindungsstrebe ist in einer Ausnehmung 84 (Fig. 3) angeordnet. Die Ausnehmung 84 ist in einem nach innen ragenden rippenförmigen Ansatz 86 vorgesehen. An der gegenüberliegenden Seite, d.h. in der weiteren Kunststoffteil-Hälfte, ist die Anordnung entsprechend. Die vordere Verbindungsstrebe 80 ist in einer Ausnehmung 88 (Fig. 3) angeordnet. Zum Verspannen der beiden Hälften des Lastenfahrradbehälters weisen die Verbindungsstreben 80,82 beispielsweise auf einer Seite einen als Kopf ausgebildeten Ansatz auf, wobei an der anderen Seite der Streben eine Mutter aufgeschraubt wird. Ebenso können beide Verbindungsstreben ein Innengewinde aufweisen, so dass die Fixierung von außen durch insbesondere als Schrauben ausgebildete Fixierelemente 90 (Fig. 2) erfolgen kann.

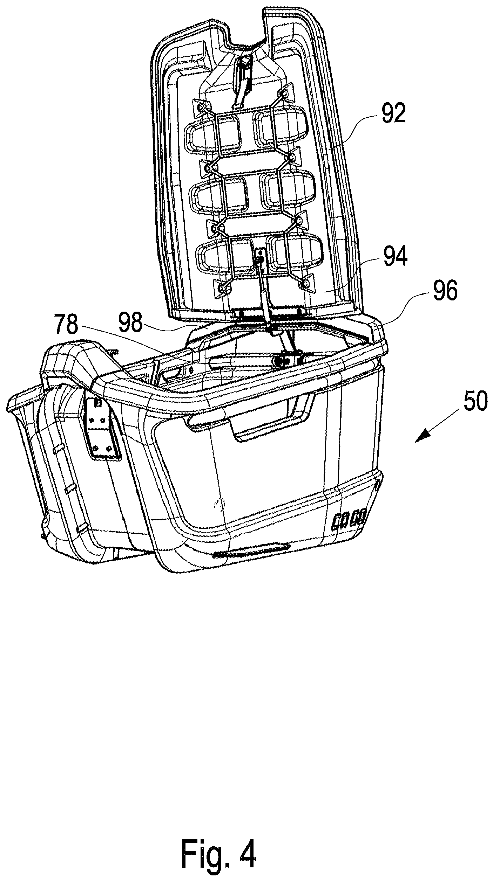

Zusätzlich ist es möglich, den Lastenfahrradbehälter mit einem Deckel 92 (Fig. 4) zu verschließen. Der Deckel kann über ein bandförmiges Scharnier 94 mit einem Auflageelement 96, das auf einer Oberseite des Behälters 50 aufliegt, verschlossen sein. Das Scharnier 94 ist über ein Verbindungselement 98 mit dem Verbindungsbügel 78 verbunden, so dass die Kraft und das Gewicht des Deckels 92 insbesondere beim Öffnen nicht auf den Kunststoffbehälter 50, sondern im Wesentlichen auf das Verbindungselement 78 einwirkt. Das Vorsehen eines Deckels auf dem Lastenfahrradbehälter und dessen Verbindung zu dem Verbindungselement 78 stellt eine selbständige Erfindung unabhängig von der Ausgestaltung des Lastenfahrradbehälters selbst dar. Beispielsweise könnte dieser aus mehreren Teilen oder auch einstückig ausgebildet sein.

Unabhängig davon, ob der Behälter 50 einen Deckel 92 aufweist oder nicht, ist an der Vorderwand eine entgegen der Fahrtrichtung in den Behälter 50 hineinragende Vertiefung 98 vorgesehen. In diese Vertiefung 98 ist zumindest ein Teil der Gabelelemente 32 der Tragelemente 28 angeordnet und über ein plattenförmiges Verbindungselement 100 fixiert. Das insbesondere als Metallplatte o.dgl. ausgebildete Verbindungselement 100 ist mit dem Verbindungsbügel 78 verbunden, so dass auftretende Kräfte unmittelbar zwischen dem Verbindungsbügel 78 und dem Fahrradrahmen übertragen werden. Die Krafteinleitung in dem als Kunststoff bestehenden Behälter 50 ist somit stark reduziert.

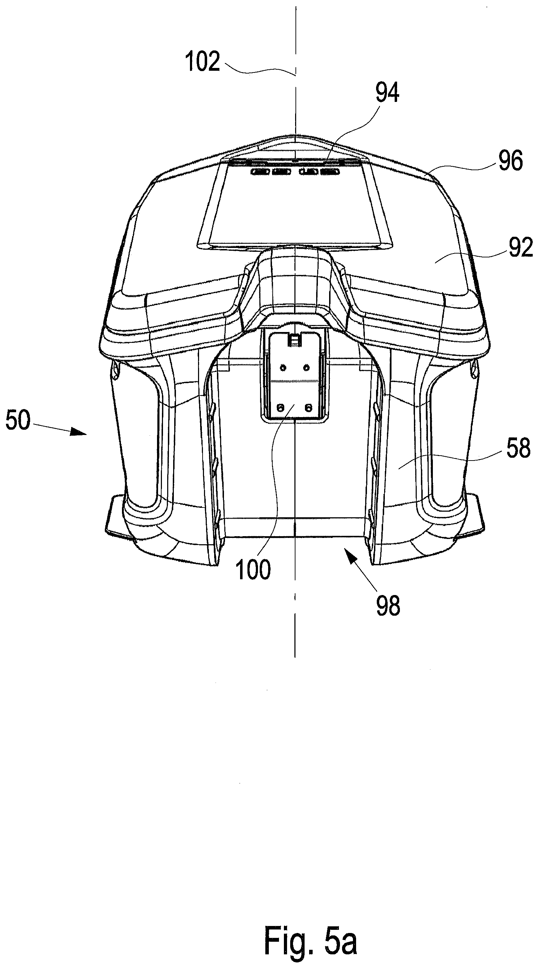

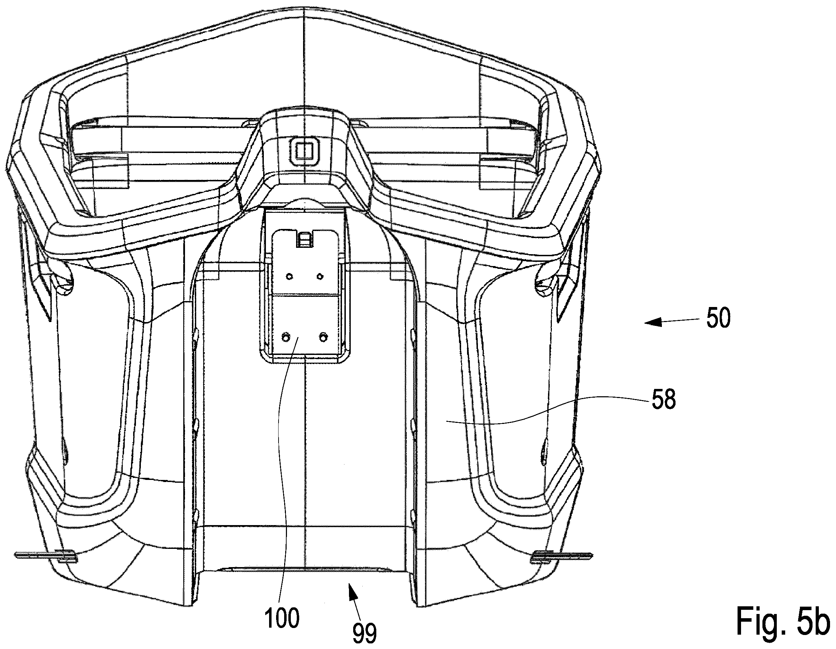

Unabhängig von dem Deckel 92 und dem Auflageelement 96 ist der Behälter 50 aus zwei Hälften (Fig. 3) hergestellt, wobei die Trennebene 102 (Fig. 5) in montiertem Zustand mit der Fahrtmittelebene zusammenfällt.

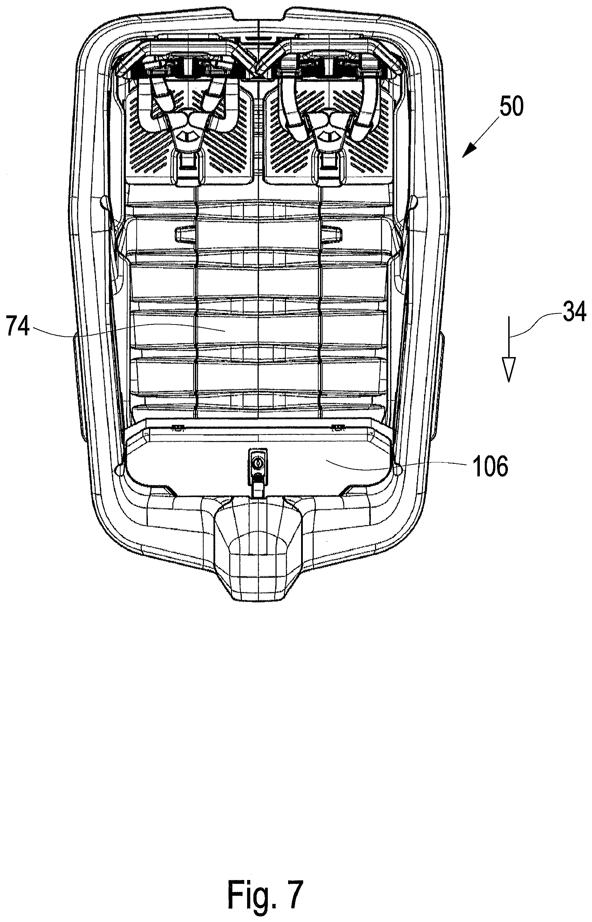

Innerhalb des Lastenfahrradbehälters 50 können nicht nur Lasten, sondern beispielsweise auch Sitze 104 für Kinder vorgesehen werden (Fig. 6). Anstelle eines in Fahrtrichtung 34 vorderen Sitzes 104 kann auch ein Aufbewahrungsfach in den Behälter 50 eingesetzt werden. Der Aufbewahrungsbehälter 106 (Fig. 7) kann auf einfache Weise an der Innenseite des Behälters zwischen Aufnahmen justiert bzw. eingehängt werden.

## Patentansprüche

1. Lastenfahrradbehälter mit
einem Bodenelement (52), zwei einander gegenüberliegenden Seitenwänden (54), einer Rückwand (56) und einer Vorderwand (58),
wobei der Lastenfahrradbehälter (50) aus zumindest zwei Kunststoffteilen hergestellt ist, wobei das erste Kunststoffteil zumindest eine Seitenwand (54) und das zweite Kunststoffteil zumindest die zweite Seitenwand (54) umfasst,
**dadurch gekennzeichnet, dass**
an Innenseiten der Seitenwände (54) Versteifungsrippen (58,60) vorgesehen sind und
beide Kunststoffteile jeweils zumindest einen Teil der Rückwand und der Vorderwand umfassen.

2. Lastenfahrradbehälter nach Anspruch 1, **dadurch gekennzeichnet, dass** eine Entformungsrichtung der Kunststoffteile senkrecht zur Seitenwand (54) und/oder parallel zur Rückwand (56) bzw. parallel zur Vorderwand (58) bzw. parallel zum Bodenelement (52) ist.

3. Lastenfahrradbehälter nach Anspruch 1 oder 2, **dadurch gekennzeichnet, dass** in Entformungsrichtung offene Ausnehmungen (54,56,70,84,88) vorgesehen sind.

4. Lastenfahrradbehälter nach einem der Ansprüche 1 bis 3, **dadurch gekennzeichnet, dass** bei einem Lastenfahrrad aus zwei vertikal geteilten Hälften die Versteifungsrippen (58,60) in Entformungsrichtung hinterschnittfrei ausgebildet sind.

5. Lastenfahrradbehälter nach einem der Ansprüche 1 bis 4, **dadurch gekennzeichnet, dass** die Versteifungsrippen (58,60) als Armauflagen, Halteelemente für Anbauteile, wie Trinkflaschen, Aufbewahrungsfächer u.dgl. ausgebildet sind.

6. Lastenfahrradbehälter nach einem der Ansprüche 1 bis 5, **dadurch gekennzeichnet, dass** an einer Innenseite des Bodenelements (52) offen Rillen oder Rippen ausgebildet sind, die zur Versteifung und dazu dienen können, dass das Bodenelement (52) an der Innenseite nicht glatt ist, so dass transportierte Güter nicht verrutschen.

7. Lastenfahrradbehälter nach einem der Ansprüche 1 bis 6, **dadurch gekennzeichnet, dass** das erste oder das zwei Kunststoffteil jeweils zumindest ein Teil des Bodenelements (52) umfasst.

8. Lastenfahrradbehälter nach einem der Ansprüche 1 bis 7, **dadurch gekennzeichnet, dass** beide Kunststoffteile jeweils ein Teil, insbesondere jeweils die Hälfte des Bodenelements (52) und/oder der Vorderwand (58) umfasst.

9. Lastenfahrradbehälter nach einem der Ansprüche 1 bis 8, **dadurch gekennzeichnet, dass** die beiden Kunststoffteile spiegelsymmetrisch ausgebildet sind.

10. Lastenfahrradbehälter nach einem der Ansprüche 1 bis 9, **dadurch gekennzeichnet, dass** genau zwei Kunststoffteile zur Ausbildung des Bodenelements (52), der beiden Seitenwände (54), der Rückwand (56) und der Vorderwand (58) vorgesehen sind.

11. Lastenfahrradbehälter nach einem der Ansprüche 1 bis 10, **dadurch gekennzeichnet, dass** die insbesondere zwei Kunststoffteile über Verbindungselemente (78,80,82) miteinander verbunden sind, wobei die Verbindungselemente vorzugsweise Metall aufweisen bzw. aus Metall hergestellt sind.

12. Lastenfahrradbehälter nach Anspruch 11, **dadurch gekennzeichnet, dass** die Verbindungselemente einen Verbindungsbügel (78) aufweisen, der vorzugsweise umlaufend ist, wobei der Verbindungsbügel vorzugsweise zwei Bügelelemente (78) aufweist, die im Bereich der Rückwand (56) und der Vorderwand (58) miteinander verbunden sind.

13. Lastenfahrradbehälter nach Anspruch 12, **dadurch gekennzeichnet, dass** der Verbindungsbügel (78) in einer Ausnehmung (79) angeordnet ist, die in den Seitenwänden (54) vorzugsweise als nach außen offene Nut ausgebildet ist.

14. Lastenfahrradbehälter nach einem der Ansprüche 11 bis 13, **dadurch gekennzeichnet, dass** die Verbindungselemente zumindest ein, insbesondere zwei Verbindungsstreben (80,82) aufweisen.

15. Lastenfahrradbehälter nach Anspruch 14, **dadurch gekennzeichnet, dass** eine Verbindungsstrebe (82) an einer Innenseite der Rückwand (56) und/oder eine Verbindungsstrebe (80) an einer Innenseite der Vorderwand (58) angeordnet ist.

16. Lastenfahrradbehälter nach Anspruch 14 oder 15, **dadurch gekennzeichnet, dass** die mindestens eine Verbindungsstrebe (80,81) sich zwischen den Seitenwänden (54) erstreckt und insbesondere mit diesen verbunden ist.

17. Lastenfahrradbehälter nach Anspruch 16, **dadurch gekennzeichnet, dass** die mindestens eine Verbindungsstrebe an ihren Enden jeweils lösbare Ansätze (90) aufweist, wobei vorzugsweise zumindest einer der beiden Ansätze (90) zum Verspannen der Kunststoffteile justierbar ist, insbesondere als Schraube oder Mutter ausgebildet ist.

18. Lastenfahrradbehälter nach Anspruch 16 oder 17, **dadurch gekennzeichnet, dass** die Ansätze (90) jeweils in einer nach außen offenen Vertiefung der Seitenwand (54) angeordnet sind.

19. Lastenfahrradbehälter nach einem der Ansprüche 1 bis 18, **dadurch gekennzeichnet, dass** im Bodenelement (52) eine Öffnung (72) vorgesehen ist, die vorzugsweise mit einem Deckel (74) verschließbar ist.

20. Lastenfahrradbehälter nach einem der Ansprüche 1 bis 19, **dadurch gekennzeichnet, dass** zum insbesondere vollständigen Verschließen des Lastenfahrradbehälters ein Deckel (92) vorgesehen ist.

21. Lastenfahrradbehälter nach Anspruch 20, **dadurch gekennzeichnet, dass** der Deckel (92) schwenkbar mit einem Verbindungselement, insbesondere dem Verbindungsbügel (78), verbunden ist.

22. Lastenfahrrad-Rahmen, mit
einem Hinterbau (26) zur Aufnahme eines Hinterrads (24),
einem Gabelelement (4) zur Aufnahme eines Vorderrads (42),
einem Tragelement (28),
und einem von dem Tragelement (28) zwischen einem Lenkerrohr und dem Gabelelement (40) aufgenommenen Lastenfahrradbehälter nach einem der Ansprüche 1 bis 21.

## Claims

1. A cargo bike box, comprising
a bottom element (52), two opposing side walls (54), a rear wall (56) and a front wall (58),
wherein the cargo bike box (50) is made of at least two plastic parts, the first plastic part comprising at least one side wall (54) and the second plastic part comprising at least the second side wall (54),
**characterized in that**
stiffening ribs (58,60) are provided on inner sides of the side walls (54), and
both plastic parts each comprise at least a part of the rear wall and the front wall.

2. The cargo bike box according to claim 1, **characterized in that** a demolding direction of the plastic parts is perpendicular to the side wall (54) and/or parallel to the rear wall (56) or parallel to the front wall (58) or parallel to the bottom element (52).

3. The cargo bike box according to claim 1 or 2, **characterized in that** recesses (54,56,70,84,88) open in the demolding direction are provided.

4. The cargo bike box according to one of claims 1 to 3, **characterized in that**, in the case of a cargo bike comprising two vertically divided halves, the stiffening ribs (58,60) are formed without undercuts in the demolding direction.

5. The cargo bike box according to one of claims 1 to 4, **characterized in that** the stiffening ribs (58,60) are formed as arm rests, holding elements for attachments, such as drinking bottles, storage compartments and the like.

6. The cargo bike box according to one of claims 1 to 5, **characterized in that** open grooves or ribs are formed on an inner side of the bottom element (52), which can serve to stiffen the bottom element (52) and to prevent it from being smooth on the inner side so that transported goods do not slip.

7. The cargo bike box according to one of claims 1 to 6, **characterized in that** the first or the second plastic part each comprises at least a part of the bottom element (52).

8. The cargo bike box according to one of claims 1 to 7, **characterized in that** both plastic parts each comprise a part, in particular respectively half of the bottom element (52) and/or the front wall (58).

9. The cargo bike box according to one of claims 1 to 8, **characterized in that** the two plastic parts are mirror-symmetrical.

10. The cargo bike box according to one of claims 1 to 9, **characterized in that** exactly two plastic parts are provided to form the bottom element (52), the two side walls (54), the rear wall (56) and the front wall (58).

11. The cargo bike box according to one of claims 1 to 10, **characterized in that** the in particular two plastic parts are connected to each other via connecting elements (78,80,82), the connecting elements preferably comprising metal or being made of metal.

12. The cargo bike box according to claim 11, **characterized in that** the connecting elements have a connecting bracket (78) which is preferably circumferential, the connecting bracket preferably having two bracket elements (78) which are connected to one another in the area of the rear wall (56) and the front wall (58).

13. The cargo bike box according to claim 12, **characterized in that** the connecting bracket (78) is arranged in a recess (79) which is formed in the side walls (54) preferably as an outwardly open groove.

14. The cargo bike box according to one of claims 11 to 13, **characterized in that** the connecting elements have at least one, in particular two, connecting struts (80,82).

15. The cargo bike box according to claim 14, **characterized in that** a connecting strut (82) is arranged on an inner side of the rear wall (56) and/or a connecting strut (80) is arranged on an inner side of the front wall (58).

16. The cargo bike box according to claim 14 or 15, **characterized in that** the at least one connecting strut (80,81) extends between the side walls (54) and in particular is connected thereto.

17. The cargo bike box according to claim 16, **characterized in that** the at least one connecting strut has detachable lugs (90) at each of its ends, preferably at least one of the two lugs (90) being adjustable for bracing the plastic parts, in particular being designed as a screw or nut.

18. The cargo bike box according to claim 16 or 17, **characterized in that** the lugs (90) are each arranged in an outwardly open recess of the side wall (54).

19. The cargo bike box according to one of claims 1 to 18, **characterized in that** an opening (72) is provided in the bottom element (52), which opening can preferably be closed with a lid (74).

20. The cargo bike box according to one of claims 1 to 19, **characterized in that** a lid (92) is provided for in particular completely closing the cargo bike box.

21. The cargo bike box according to claim 20, **characterized in that** the cover (92) is pivotably connected to a connecting element, in particular the connecting bracket (78).

22. A cargo bike frame, comprising
a rear frame (26) for receiving a rear wheel (24),
a fork element (4) for receiving a front wheel (42),
a support element (28);
and a cargo bike box received by the support element (28) between a handlebar tube and the fork element (40), according to one of claims 1 to 21.

## Revendications

1. Réceptacle de bicyclette de transport avec
un élément de fond (52), deux parois latérales (54) opposées, une paroi arrière (56) et une paroi avant (58),
le réceptacle de bicyclette de transport (50) étant constitué d'au moins deux pièces en matière plastique, la première pièce en matière plastique comprenant au moins une paroi latérale (54) et la deuxième pièce en matière plastique comprenant au moins la deuxième paroi latérale (54),
**caractérisé en ce que**
des nervures de renforcement (58, 60) sont prévues sur des côtés intérieurs des parois latérales (54) et
les deux pièces en matière plastique comprennent chacune au moins une partie de la paroi arrière et de la paroi avant.

2. Réceptacle de bicyclette de transport selon la revendication 1, **caractérisé en ce qu'**une direction de démoulage des pièces en matière plastique est perpendiculaire à la paroi latérale (54) et/ou parallèle à la paroi arrière (56) ou parallèle à la paroi avant (58) ou parallèle à l'élément de fond (52).

3. Réceptacle de bicyclette de transport selon la revendication 1 ou 2, **caractérisé en ce que** des évidements (54, 56, 70, 84, 88) ouverts dans la direction de démoulage sont prévus.

4. Réceptacle de bicyclette de transport selon l'une quelconque des revendications 1 à 3, **caractérisé en ce que**, pour une bicyclette de transport en deux moitiés verticalement divisées, les nervures de renforcement (58, 60) sont réalisées sans contre-dépouille dans la direction de démoulage.

5. Réceptacle de bicyclette de transport selon l'une quelconque des revendications 1 à 4, **caractérisé en ce que** les nervures de renforcement (58, 60) sont réalisées sous la forme d'accoudoirs, d'éléments de retenue pour des pièces rapportées, telles que bouteilles de boisson, des compartiments de stockage et similaires.

6. Réceptacle de bicyclette de transport selon l'une quelconque des revendications 1 à 5, **caractérisé en ce que**, sur un côté intérieur de l'élément de fond (52), des rainures ou nervures ouvertes sont formées, qui peuvent servir à renforcer et à ce que l'élément de fond (52) ne soit pas lisse du côté intérieur de sorte que les marchandises transportées ne glissent pas.

7. Réceptacle de bicyclette de transport selon l'une quelconque des revendications 1 à 6, **caractérisé en ce que** la première ou la deuxième pièce en matière plastique comprend respectivement au moins une partie de l'élément de fond (52).

8. Réceptacle de bicyclette de transport selon l'une quelconque des revendications 1 à 7, **caractérisé en ce que** les deux pièces en matière plastique comprennent respectivement une partie, en particulier respectivement la moitié de l'élément de fond (52) et/ou de la paroi avant (58).

9. Réceptacle de bicyclette de transport selon l'une quelconque des revendications 1 à 8, **caractérisé en ce que** les deux pièces en matière plastique sont formées de manière symétrique en miroir.

10. Réceptacle de bicyclette de transport selon l'une quelconque des revendications 1 à 9, **caractérisé en ce que** exactement deux pièces en matière plastique sont prévues pour former l'élément de fond (52), les deux parois latérales (54), la paroi arrière (56) et la paroi avant (58).

11. Réceptacle de bicyclette de transport selon l'une quelconque des revendications 1 à 10, **caractérisé en ce qu'**en particulier les deux pièces en matière plastique sont reliées l'une à l'autre par des éléments de liaison (78, 80, 82), les éléments de liaison présentant de manière préférée du métal ou étant réalisés en métal.

12. Réceptacle de bicyclette de transport selon la revendication 11, **caractérisé en ce que** les éléments de liaison présentent un étrier de liaison (78), qui est manière préférée périphérique, l'étrier de liaison présentant de manière préférée deux éléments d'étrier (78) reliés l'un à l'autre dans la zone de la paroi arrière (56) et de la paroi avant (58).

13. Réceptacle de bicyclette de transport selon la revendication 12, **caractérisé en ce que** l'étrier de liaison (78) est agencé dans un évidement (79) qui est réalisé dans les parois latérales (54) de manière préférée sous la forme d'une rainure ouverte vers l'extérieur.

14. Réceptacle de bicyclette de transport selon l'une quelconque des revendications 11 à 13, **caractérisé en ce que** les éléments de liaison présentent au moins une, en particulier deux entretoises de liaison (80, 82).

15. Réceptacle de bicyclette de transport selon la revendication 14, **caractérisé en ce qu'**une entretoise de liaison (82) est agencée sur un côté intérieur de la paroi arrière (56) et/ou une entretoise de liaison (80) est agencée sur un côté intérieur de la paroi avant (58).

16. Réceptacle de bicyclette de transport selon la revendication 14 ou 15, **caractérisé en ce que** l'au moins une entretoise de liaison (80,81) s'étend entre les parois latérales (54) et est en particulier reliée à celles-ci.

17. Réceptacle de bicyclette de transport selon la revendication 16, **caractérisé en ce que** l'au moins une entretoise de liaison présente à ses extrémités respectivement des fixations (90) amovibles, au moins l'une des deux fixations (90) étant de manière préférée réglable pour retenir les pièces en matière plastique, en particulier étant réalisée sous la forme d'une vis ou d'un écrou.

18. Réceptacle de bicyclette de transport selon la revendication 16 ou 17, **caractérisé en ce que** les fixations (90) sont agencées respectivement dans un renfoncement ouvert vers l'extérieur de la paroi latérale (54).

19. Réceptacle de bicyclette de transport selon l'une quelconque des revendications 1 à 18, **caractérisé en ce que**, dans l'élément de fond (52), une ouverture (72) est prévue, qui peut être fermée de manière préférée avec un couvercle (74).

20. Réceptacle de bicyclette de transport selon l'une quelconque des revendications 1 à 19, **caractérisé en ce qu'**un couvercle (92) est prévu pour fermer en particulier complètement le réceptacle de bicyclette de transport.

21. Réceptacle de bicyclette de transport selon la revendication 20, **caractérisé en ce que** le couvercle (92) est relié de manière pivotante à un élément de liaison, en particulier à l'étrier de liaison (78).

22. Réceptacle de bicyclette de transport, avec
une base arrière (26) permettant d'accueillir une roue arrière (24),
un élément formant fourche (4) permettant d'accueillir une roue avant (42),
un élément de support (28),
et un réceptacle de bicyclette de transport accueilli par l'élément de support (28) entre un tube de guidon et l'élément formant fourche (40) selon l'une quelconque des revendications 1 à 21.
